# EUROPEAN PATENT SPECIFICATION

(11) **EP 0 541 731 B1**
(45) Date of publication and mention of the grant of the patent: **13.08.1997**
(21) Application number: 91921017.9
(22) Date of filing: 30.05.1991
(51) Int. Cl.: B61B 13/00, B60F 1/00

(54) **TRANSPORTSYSTEM**
TRANSPORTSYSTEM
SYSTEME DE TRANSPORT

(30) Priority: 01.06.1990 DK 1354/90; 25.09.1990 DK 2314/90; 13.12.1990 DK 2957/90; 31.01.1991 DK 168/91
(43) Date of publication of application: 19.05.1993
(73) Proprietor: JENSEN, Palle Rasmus, DK-1904 Frederiksberg C (DK)
(72) Inventor: JENSEN, Palle Rasmus, DK-1904 Frederiksberg C (DK)
(74) Representative: Lund, Preben
(86) International application number: DK9100146
(87) International publication number: WO9118777

(56) References cited:
- DE-A- 2 622 778
- DE-A- 2 744 405
- GB-A- 1 455 817
- US-A- 3 225 704
- US-A- 3 447 481

## Description

The invention relates to a transport system which combines the advantages of an electric car with the advantages of a train as defined in the preamble of claim 1.

### BACKGROUND

The modern big cities suffer from an increasing load of traffic, both as to pollution, noise and space limitation. The dynamic traffic of the city is both the basis of the city society and its curse.

The collective traffic systems as we know them today are no real alternative to the private automobile.

Waiting time, the lack of geografic coverage and problems with damage are among the disadvantages of the systems.

Private car driving, as we know it today cannot continue.

Traffic accidents, pollution, the use of ressources, destruction of the city environment, the lack of parking space are some of the problems of private car driving.

Known transportation systems divide mainly into two "transport cultures": The automobile culture and the train culture.

The automobile culture which is the dominating in modern society is characterized by an enormous flexibility. This is a very important aspect for the modern man, living an active and spontaneous life. The freedom that enables you to, anytime to place yourself behind the wheel and, without change of transportation medium to reach any target placed along a road, is extremely important.

The train culture is developed in a time where the pressure of time was less, and where a travel was something you planned. By planning the voyage in relation to the time table of the train, the traveller obtains the very pleasant effect that she does not have to control the vehicle, but she can relax and be sure that the train is one of the safest ways to be transported.

In the past, hybrid traffic systems have therefore been suggested, which seeks to provide the flexibility and comfort of the automobile together with the advantages of the train, such as high speed automatic travel, high passenger capacity and high speed safety by reduced pollution emissions due to remote electrical powering and reduced air resistance per passenger.

Prior art document US-A-3 225 704 discloses such a dual use vehicle system in which individual manually controlled vehicles may be incorporated into an automatically controlled high density transportation system. The vehicle is preferably electrically driven and battery powered and is capable of being coupled to an elevated twin rail structure by wheel arrangements provided in the roof of and underneath the vehicle by driving said vehicle onto the rail structure at launching areas where the rail structure comes into alignment with the wheel arrangements. Once the vehicle is on the rail structure it is feeded with electrical power therefrom.

Prior art document US-A-3 447 481 shows a monorail traffic system for dual use in which the vehicle, underneath it and between its ground engaging wheels, discloses a central tunnellike receiving element or notch provided with wheel means for riding on a monorail structure. This document forms the preamble of claim 1.

### THE AIM OF THE INVENTION

It is a primary object of the present invention to provide an improved dual mode rail traffic system which accomplishes an enhanced functionality in the following areas :
Increased braking capability and reliability, permitting higher travelling speeds at high density traffic at a high safety level;
minimal rolling resistance and noise;
high stability and very low weight of rail structure and vehicle rail receiving structure, contributing positively to the overall economy, the energy consumption and the driving dynamics of the system.

These objects have been accomplished by the subject matter defined in claim 1.

It is a further object of the invention to accomplish increased drive on/ drive off speeds at the launching areas at a high safety level;
It is still a further object of the present invention to provide means for swift and easy battery exchange;
It is a further object to provide weight re-distributing means for obtaining a balanced weight distributing of the vehicle on the rail:
It is a further object to provide signal transmitting means between the vehicle and the rail structure for controlling rail shifting operations, etc.

These objects have been accomplished by the dependent claims.

The present invention, which is named the RUF system, is built around a small electric car and a very simple and light triangular rail. The invention will in the following be described by means of the following figures of which further advantages will appear.

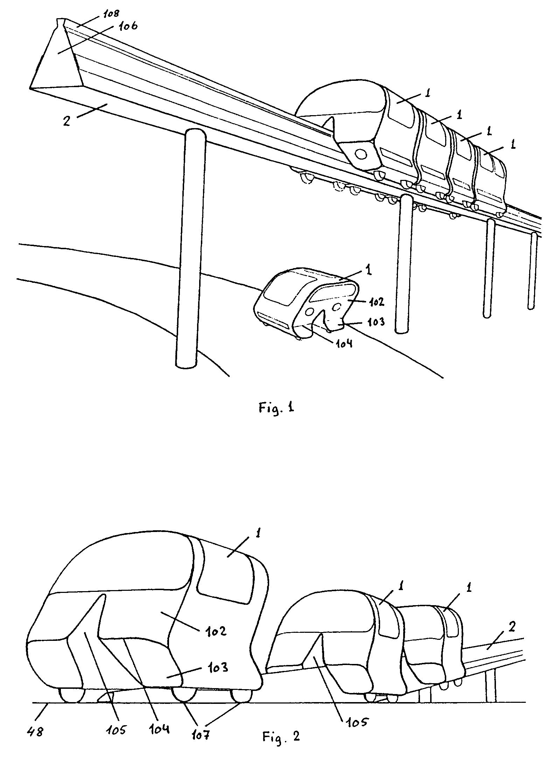

Fig. 1 shows the two "modes" of the RUF-system. The RUF (1) can either drive quite normal on the road together with other cars, or on a triangular rail (2), either alone or as shown in a row. The cabine of the RUF is characterized by that the front and rear consists of two planes (102) and (103) intersecting along a horizontal line (104). The cross section of the rail (106) is mainly triangular, but in the top it is supplied with a special braking rail.

Fig. 2 shows how the RUFs (1) can leave the rail (2) simply by letting the rail flatten out and become a road (48). Ahead of this point, the units can be separated as shown, but they can also leave the rail while they are coupled together. The figure shows the characteristic notch (105) along the cabine.

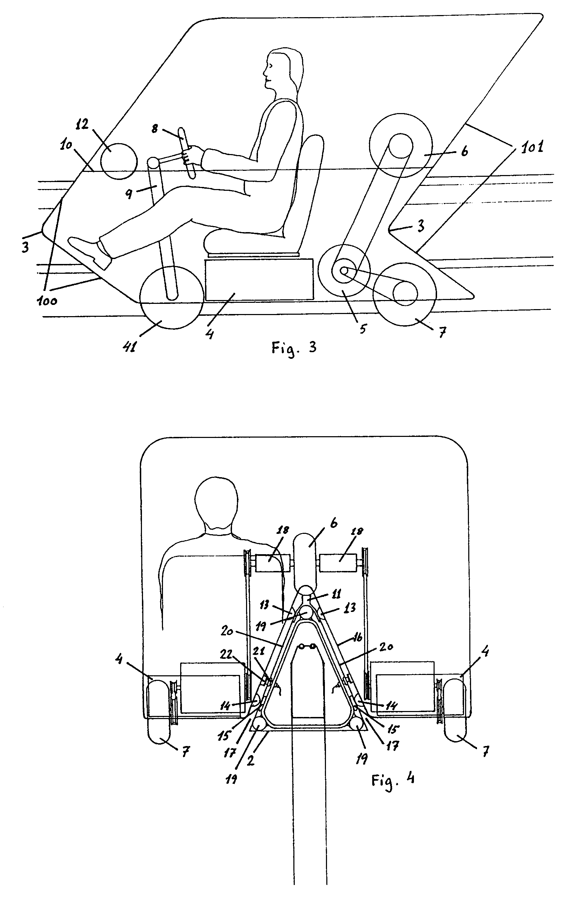

Fig. 3 shows a cross section through the RUF-cabine seen from the side. The length of the cabine can vary, but the shape of the front (100) and the rear (101) is mainly the same and common to all RUFs. The shape is characteristic by having a notch (3) with an angle of approximately 90 degrees. This makes the rear (101) a perfect reflector for either radar- or sound-waves emitted from the RUF driving behind. The angle may have another size if the surface of the rear is made up of small reflectors (small inverted cube-corners). The batteries (4) are placed as low as possible in order to lower the center of gravity. The motor (5) has ordinary belt drive to the central rail-wheel (6) and to the rear-wheels (7). The gearing is different to the two drive systems. The rail-wheel (6) rotates for example 3 times as fast as the rear-wheel (7). The speed on the rail can this way become 3 times as big (200 km/h) as on the road.
The steering-wheel (8) is coupled to the front-wheels (41) by means of a system (9) which binds together the movements of the front-wheels over the notch (10) running along the central part of the cabin.
The central rail-wheel (6) can be supplemented by a corresponding wheel (12) (without driving power) placed in the front part of the cabin.

Fig. 4 shows the cabin and the rail seen from behind in cross section.
The batteries (4) are placed as low as possible and on each side of the notch. If only one battery is used, it is placed in the right side because of the center of gravity, since there always is a driver seated in the left side. The motor can be doupled. If there is only one, it should also be situated in the right side. The central rail-wheel (6) rests on top of the top-profile (11) of the triangular rail. The wheel is a smooth rubber-wheel without brake linings. On each side of the rail-wheel is seen some ordinary coupling-elements (18) connecting the two rear-wheels (7) in a way that allows them to rotate with different speed during a turn on ordinary road. On the sides of the triangular rail, a number of support-wheels (13) and (14) are rolling partly on the sides of the top profile (11), partly on a pair of longitudinally rails (15) placed some distance down the sides of the rail (but not all the way down). These support-wheels supports the RUF both in the front and the rear.
The RUF-cabin is on the sides (16) towards the rail covered with sound-absorbing material and the lower support-wheels (14) are placed at a small distance from the slit (17) between the rail and the RUF. Hereby the minimal noise from the wheels is further dampened and very little noise escapes to the surroundings.
The rail is built around a lattice mast with three lengthwise tubes (19). The upper tube is connected to the special top-rail-profile (11). The sides and the bottom of the rail is covered by wheather resistant plates (20). The sides can be covered by solar cells which can directly contribute to the powersupply of the system. Current-rails (21) on the sides of the triangular rail supplies the RUF with current via sliding contacts (22).

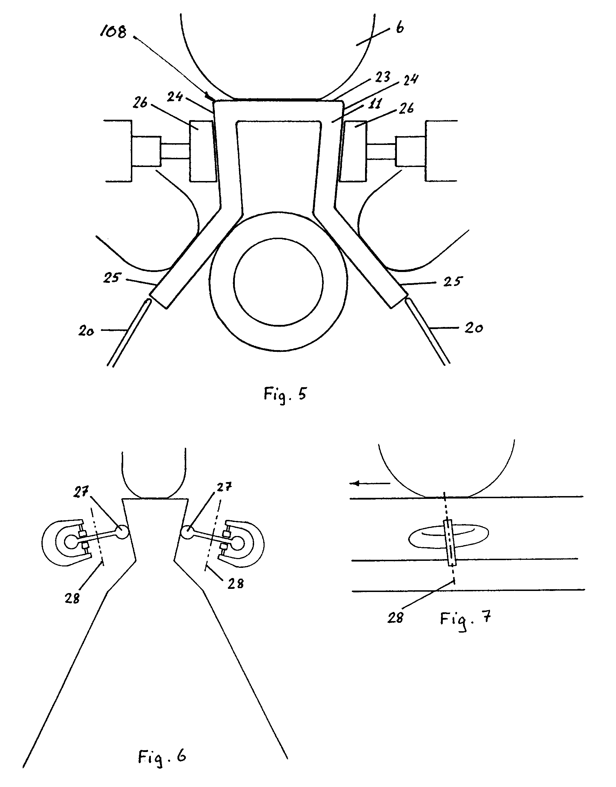

Fig. 5 shows the special rail-brake which squeezes directly around the top of the rail profile. The top profile (11) is supplied with a smooth plane top-side (23) on which the central rail-wheel (6) rools with minimum rolling resistance and noise. The upper part of the sides (24) is tilting a bit inwards while the lower part (25) is tilting less than the sideplates (20) of the rail.
The upper part (24) of the top-profile (11) can squeezed by a pair of powerful braking-shoes (26) which by ordinary means can be supplied with a very powerful braking-grip around the sides of the top-profile. The braking-shoes (26) which can be multiple are firmly connected to the chassis of the RUF in a place behind a vertical line through the center of gravity of the RUF. This ensures a very stable braking action. The use of tilting planes (24) ensures that the braking-grip cannot slip upwards. The placing of the braking-place exactly below or below and close behind the rear central rail-wheel (6) ensures an optimum braking action. A rail-brake of this kind cannot lock !!!

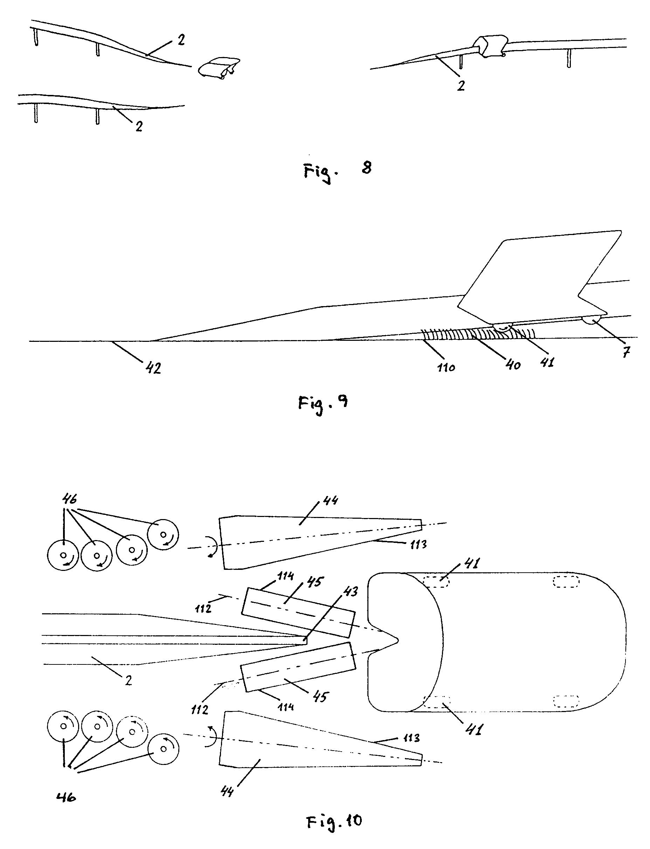

Fig. 6 and 7 shows an alternative construction of the rail-brake. Instead of braking-shoes acting directly on the rail-profile it uses braking wheels (27) on which an ordinary disk-brake delivers the braking-effect. By letting the axis (28) of the braking wheels have a slight tilting forwards in the direction of movement as shown in fig. 7, it is obtained that the wheels during braking makes the RUF stick to the rail.

Fig. 8 shows the simplest form of a switch where the RUFs can change rail, leave or enter the rail system. The rails (2) simply disappears by lowering to road level and "flatten out" (or by raising the road to rail level and at the same time let the rail disappear).

Fig. 9 shows how a mat of for example Nylon or another hard-wearing and flexible material contribute to accelerate the wheels (7) and (41) before they touch the road (42). The mat is placed imidiatly in front of the point (110) where the wheels are touching the road.

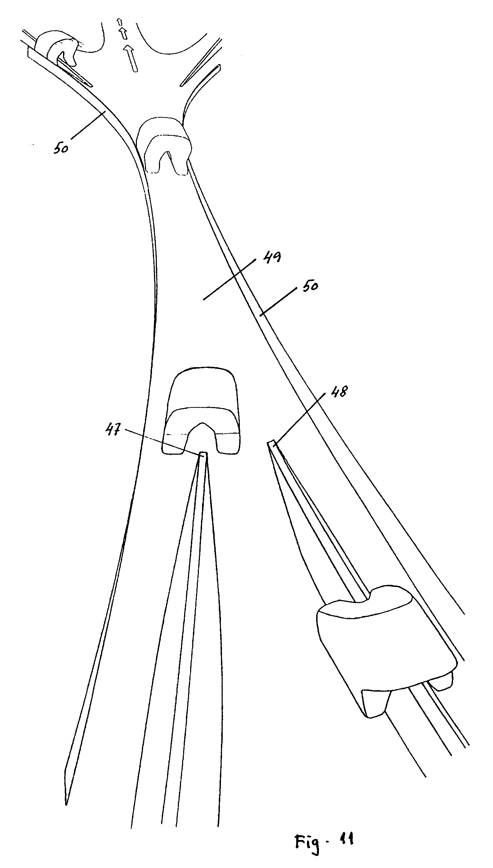

Fig. 10 shows how it is possible to secure that the RUF always hits a rail correctly.
On each side of the starting point of the rail (43) is placed a conical roll (44) which rotates in such a way that if one of the front wheels (41) hits it, the wheel will be forced to the correct position before it is too late. The other front wheel will be placed on a free-rolling roll (45) which helps it to get right on track. The axis (112) of the free-rolling rolls, are two by two parallel to the lines (113) where the conical rolls are cutting the plane of the road closest to the rail. The distance between the rolls (44) and (45) which belongs together, corresponds to the distance between the wheels.
Since all RUFs have the same width it is furthermore possible to place side-rolls (46) affecting the sides if a RUF hits the rail in a wrong angle. The side-rolls can be passive free-rolling rolls or rotate at an appropriate speed.

Fig. 11 shows an example of a switch-place where several functions are combined.
At the bottom of the figure it is shown how two rails disappear (47 and 48) and the RUF-flows from them are merged together on a piece of road (49) surrounded by rail-guides (50) on each side. Ahead of this point, the RUFs are separated and syncronized for example by means of the method given in fig. 19.
On the upper part of the figure is shown how one can choose between three possibilities: rail to the right, rail to the left or road straight ahead.

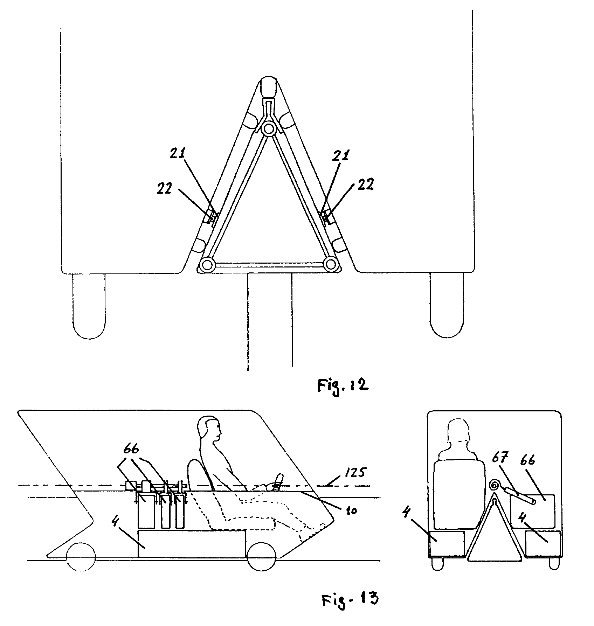

Fig. 12 shows how the gliding contacts (22) and the current rails (21) are placed.
The supply of current to the current rail can be balanced in such a way that it is undangerous to touch one of the current rails even though you are grounded. Only if you touch both the current rails at the same time you will get current through yourself.

Fig. 13 shows a special arrangement which makes it possible to balance the RUF in such a way that its center of gravity always lies close to the vertical center-plane along the rail. By making part of the battery capacity moveable in modules (66), a substantial shift of weight between the sides is possible. The battery modules of for example 10, 10 and 20 kg can realize weight-shifts of 40, 20, 0, -20 and -40 kg. The modules are hanging in spring-loaded forks (67) which can swing the modules over the central notch, around a horizontal axis (125) and down on the other side. The modules are placed on top of the ordinary batteries (4).

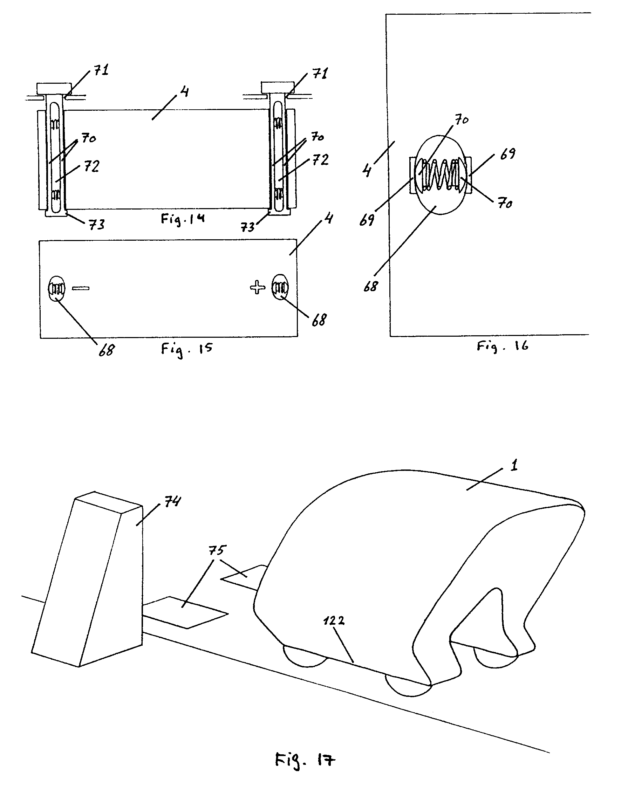

Fig. 14, 15 and 16 shows an especially appropriate construction of the batteries and their mounting. The batteries (4) in the right and the left side are identical. They are equipped with vertical holes (68) with an elliptical cross section. The terminals (only shown on fig. 26) are each constructed as two electrodes (69) placed opposite and along the part of the elliptical hole with the smallest curvature (largest radius of curvature). The electrical connection is established by means of two contact-bars (70) which are hanging isolated in two bearing-holes (71) in the chassis of the RUF. The contact-bars (70) also have an elliptical cross section, but in such a way that the central part (72) is removed to give room for a number of springs. The dimensions are chosen in such a way that the contact-bars (70) are completely separated from the surfaces of the elliptical holes (68) in a certain position. If the contact-bars are turned 90 degrees away from this position, the contact-bars (70) will have a reliable contact with the terminals (69) along its entire length.
At the bottom of the contact-bars (70) there can be a ledge (73) preventing the battery (4) to slide downwards. The contact-bars (70) can be supplied with a number of vertical contact-blades which further improves the electrical contact.

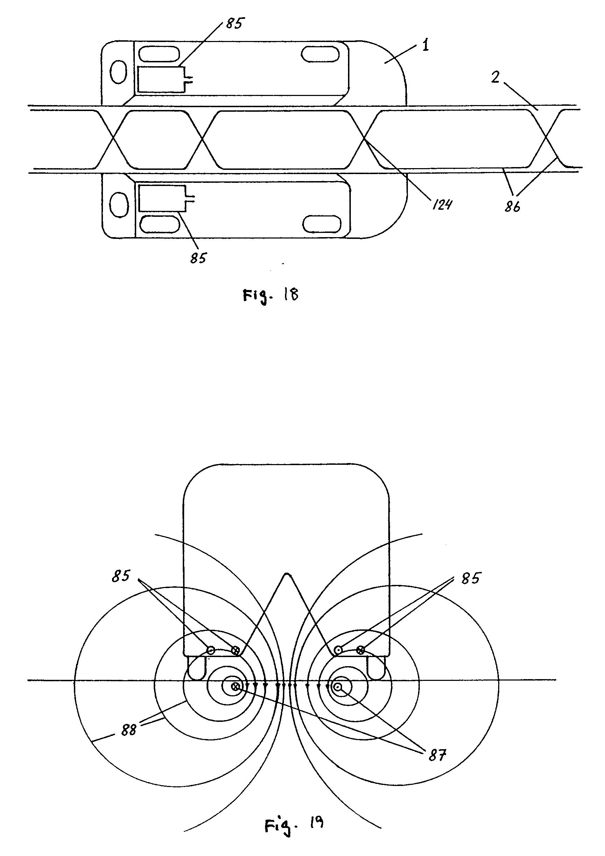

Fig. 17 shows how this type of battery-mounting makes it possible to perform a very fast "refueling" by changing the batteries in a special "accu-automaton". The RUF (1) drives to the automaton (74) where you via for example a credit card activates it. The batteries are now "dumped" through the bottom (122) of the RUF via a pair of doors (75) in the road down to an undergroung recharging-place. The batteries (4) are released from the RUF by turning the contact-bars (70) 90 degrees. On the recharging-place, the batteries are lowered to a similar pair of contact-bars pointing vertically upwards. These are now turned 90 degrees and the recharging can start. At the same time a fully charged battery is moved to a position just below the RUF and raised to the correct height whereafter the contact-bars are rotated back to the position where there is electrical contact and where the batteries are fixed. This operation can be performed in less than 20 seconds. The battery-holes (68) can be of different size to prevent wrong mounting of the batteries.

Fig. 18 shows a system for transmitting signals between the RUF (1) and the rail (2).
Two wire-loops (85) are placed under the RUF close by the central notch and exactly opposite. In the bottom of the rail a system of wires (86) is creating a magnetic field with field-lines crossing the wire-loops (85). By using a fast pulsating magnetic field, a corresponding voltage will be induced in the wire-loops (85). The voltage can be used to communicate between the rail and the RUF. If a DC component of current is superposed onto the current in the rail-wires (86) it can be obtained that the magnet field in the RUF changes direction when it passes the crossing rail-wires (86). The crossings (124) can be ordered in a pattern creating a code containing for example the geographical position ("mile-stone") or it can be controlling the velocity at the specific place.

Fig. 19 shows the same wire-loops (85) in the RUF used in a situation where the RUF drives on a normal road.
In the road there can be buried a system of parallel wires (87) creating a high-frequency magnetic field (88) around them. This field induces voltages into the two wire-loops (85). By comparing the amplitudes of the two voltages, it can be measured whether the position of the RUF on the road is correct. This system can be used both in the switch situation and on ordinary road.

## Claims

1. A transport system of the dual-mode type consisting of small individual electric car units (1) which can drive both on ordinary roads by use of wheels (7, 41) and as a rail vehicle and where the units (1) can be coupled closely together in a row in order to reduce the air resistance and in order to increase the capacity of the rail, and that the rail (2) is a structure with a mainly triangular cross section (106) with one corner pointing upwards and defining a rail top, that each unit has a longitudinal notch (105) with a shape mainly as the cross section of the rail (2), that the units (1) carry support wheels (13, 14) in the notch (105) for rolling contact with the rail **characterized** in that the top of the rail is equipped with a braking rail (108) on which a braking system of a unit (1) can grip, that the sides of the rail are covered by plates (20), and that the rail carries current rails (21) supplying electric current to the unit via current pick-up means (22), e.g. sliding contacts, also in the notch.

2. Transport system according to claim 1, **characterized** in that the braking rail in the top has two plane sides (24) with a slight tilt inwards in such a way that lines representative of their prolongations would intersect vertically below the top of the rail.

3. Transport system according to claim 1, **characterized** in that each unit (1) further comprises rechargeable batteries (4) and that the batteries (4) are mounted in such a way that they can be changed by being lowered through the bottom (122) of the unit (1).

4. Transport system according to claim 3, **characterized** in that the batteries (4) are hanging in their own contact devices (70) and that the contact devices (70) are shaped as two bars with an elliptical cross section which can be turned 90° so that they fit tightly into corresponding elliptical battery holes (68) with metallic inner surfaces connected to one of the battery poles.

5. Transport system according to claim 1 and where each unit (1) is supplied with one or more wire loops (85) which can exchange information with the surroundings, that the information consists of changing magnetic fields and that the fields are created by means of current through two parallel conductors (86) placed in the rail (2) or buried in the road (48) and with wire crossings (124) determining the position of shift of direction of the magnetic field, **characterized** in that the current in the parallel conductors (87) creates a field inducing voltages into the wire loops (85) whose sum and/or difference indicates the position of the vehicle in relation to the conductors.

6. Transport system according to claim 5, **characterized** in that the calculated position signal is used to control the turning of the front wheels (41) of the vehicle (1).

## Patentansprüche

1. Bimodales Transportsystem, bestehend aus kleinen, einzelnen, elektrischen Wageneinheiten (1), welche sowohl auf gewöhnlichen Straßen unter Nutzung von Rädern (7, 41) als auch als Schienenfahrzeuge fahren können, wobei die Einheiten (1) eng aneinander in einer Reihe angehängt werden können, um den Luftwiderstand zu verringern und die Kapazität der Schiene zu erhöhen, wobei die Schiene (2) eine Struktur aufweist mit im wesentlichen dreieckigen Querschnitt (106), wobei eine Ecke nach oben weist und die Oberseite der Schiene bildet, wobei jede der Einheiten (1) eine Längsnut (105) aufweist, welche im wesentlichen die Form des Querschnitts der Schiene (2) aufweist und die Einheiten (1) Stützrollen (13, 14) in der Nut (105) für den rollenden Kontakt mit Schiene tragen,
**dadurch gekennzeichnet**,
daß die Oberseite der Schiene mit einer Bremsschiene (108) ausgestattet ist, auf welcher das Bremssystem einer Einheit (1) greifen kann, wobei die Seiten der Schienen mit Platten (20) bedeckt sind, und die Schiene Stromschienen (21) aufweist, um die Einheiten über stromabnehmende Mittel (22) beispielsweise Gleitkontakte, welche ebenfalls in der Nut angeordnet sind, mit Strom zu versorgen.

2. Transportsytem nach Anspruch 1, **dadurch gekennzeichnet**,
daß die Bremsschiene in dem oberen Bereich zwei ebene Seiten (24) mit einer leichten inwertigen Neigung aufweist derart, daß ihre Verlängerungen sich oberhalb der Schiene schneiden würden.

3. Transportsytem nach Anspruch 1, **dadurch gekennzeichnet**,
daß jede Einheit (1) ferner wiederaufladbare Batterien (4) aufweist und daß die Batterien (4) derart montiert sind, daß sie durch Absenken durch den Boden (122) der Einheiten (1) ausgetauscht werden können.

4. Transportsytem nach Anspruch 3, **dadurch gekennzeichnet**,
daß die Batterien (4) mit ihren Kontakteinrichtungen (70) aufgehängt sind und daß die Kontakteinrichtungen (70) als zwei Stäbe mit elyptischen Querschnitt ausgebildet sind, welche um 90° derart gedreht werden können, daß sie fest in korrespondierende elyptische Batterielöcher (68) hineinpassen, die metallische Innenflächen aufweisen, welche mit den Batteriepolen verbunden sind.

5. Transportsytem nach Anspruch 1, bei dem jede Einheit (1) mit einem oder mehreren Drahtschleifen (85) ausgebildet ist, welche Informationen mit der Umgebung austauschen können, wobei die Informationen aus wechselnden magnetischen Feldern bestehen und daß die Felder durch einen durch zwei parallele Leiter (86) fließenden Strom erzeugt werden, die in der Schiene (2) oder in der Straße (48) angeordnet sind und mit Drahtkreuzungen (124) zur Bestimmung der Position des Wechsels der Richtung der magnetischen Felder versehen sind, **dadurch gekennzeichnet**,
daß der Strom in den parallelen Leitern (87) ein Feld erzeugt, welches Spannung in den Drahtschleifen (85) induziert, deren Summe und/oder Differenz die Position der Fahrzeuge im Verhältnis zu den Leitern anzeigt.

6. Transportsytem nach Anspruch 5, **dadurch gekennzeichnet**,
daß das errechnete Positionssignal dazu verwendet wird, die Drehung der Vorderräder (51) der Fahrzeuge (1) zu steuern.

## Revendications

1. Système de transport du type à mode dual constitué de petites voitures élémentaires électriques individuelles (1) qui peuvent circuler à la fois sur des routes ordinaires en utilisant des roues (7, 41) et à la fois comme un véhicule sur rail et dans lequel les éléments (1) peuvent être accouplés de façon proche ensemble en une rangée de façon à réduire la résistance de l'air et de façon à augmenter la capacité du rail, et dans lequel le rail (2) présente une structure comportant une section transversale essentiellement triangulaire (106) avec un angle dirigé vers le haut et définissant un sommet du rail, dans lequel chaque élément comporte une encoche longitudinale (105) qui présente une forme essentiellement similaire à la section transversale du rail (2), dans lequel les éléments (1) portent des roues de support (13, 14) dans l'encoche (105) pour assurer un roulement de contact avec le rail,
ledit système étant caractérisé en ce que le sommet du rail est équipé d'un rail de freinage (108) sur lequel peut se serrer un système de freinage d'un élément (1), en ce que les côtés du rail sont recouverts de plaques (20), et en ce que le rail porte des rails de courant (21) assurant l'alimentation en courant électrique de l'élément par des moyens de captage de courant (22), par exemple des contacts glissants prévus également dans l'encoche.

2. Système de transport selon la revendication 1, caractérisé en ce que le rail de freinage présente à son sommet deux côtés plans (24) présentant une légère inclinaison vers l'intérieur de telle manière que les lignes correspondant à leurs prolongements se couperaient verticalement en-dessous du sommet du rail.

3. Système de transport selon la revendication 1, caractérisé en ce que chaque élément (1) comprend en outre des batteries rechargeables (4) et en ce que les batteries (4) sont montées de telle façon qu'elles peuvent être changées en étant abaissées à travers le plancher (122) de l'élément (1).

4. Système de transport selon la revendication 3, caractérisé en ce que les batteries (4) sont suspendues dans leurs propres dispositifs (70) de contact et que les dispositifs de contact sont conformés comme deux barres présentant une section transversale elliptique qui peuvent être tournées de 90° de façon qu'elles s'ajustent étroitement dans des trous (68) elliptiques correspondants de la batterie avec leurs surfaces métalliques internes connectées à l'un des pôles de la batterie.

5. Système de transport selon la revendication 1 et dans lequel chaque élément (1) est alimenté par une ou plusieurs boucles (85) conductrices qui peuvent échanger des informations avec l'environnement, en ce que l'information consiste en la modification de champs magnétiques et en ce que les champs sont créés au moyen de courant traversant deux conducteurs parallèles (86) placés dans le rail (2) ou enfouis dans la route (48), les croisements (124) de conducteurs déterminant la position de décalage de direction du champ magnétique, caractérisé en ce que le courant crée dans les conducteurs parallèles (87) un champ qui induit des tensions dans les boucles conductrices (85) dont la somme et/ou la différence indique la position du véhicule en relation avec les conducteurs.

6. Système de transport selon la revendication 5, caractérisé en ce que le signal de position calculé est utilisé pour commander la rotation des roues avant (41) du véhicule (1).
